# EUROPEAN PATENT APPLICATION

(11) **EP 4 209 749 A1**
(43) Date of publication of application: **12.07.2023**
(21) Application number: 20952618.5
(22) Date of filing: 27.11.2020
(51) Int. Cl.: F28G 3/16, B08B 3/02

(54) **METHOD FOR CLEANING THE HEAT EXCHANGE TUBES OF STEAM GENERATORS IN A NUCLEAR POWER STATION**

(30) Priority: 01.09.2020 RU 2020128922
(71) Applicant: Joint Stock Company "Rosenergoatom", Moscow 109507 (RU); ATOMENERGOREMONT JOINT-STOCK COMPANY, Moscow, 115432 (RU); LLC "KROK", Belgorodskaya obl., 308007 (RU); Science and Innovations - Nuclear Industry Scientific Development, Private Enterprise, Moscow, 119017 (RU)
(72) Inventor: EVSEENKO, Gennadii Vasilevich, Yutanovka, 309670 (RU); SHCHETININ, Gennadii Nikolaevich, Krasnoiarsk, 660115 (RU); ROMANCHUK, Vitalii Borisovich, Moscow, 109369 (RU); SALISHCHEV, Sergei Aleksandrovich, Obninsk, 249034 (RU)
(74) Representative: Osmans, Voldemars
(86) International application number: PCT/RU2020/000640
(87) International publication number: WO 2022/050866

(57) **Abstract**

The invention relates to surface cleaning of the NPP steam generator tube bundle. The method for cleaning heat exchange tubes of NPP steam generators characterized in that a hydrodynamic manipulator connected to a hoist is inserted into a vertical corridor inside a heat exchanger, taking preliminary measurements of the dose rate inside the steam generator, measuring eddy current signals and analyzing the signals received in order to assess the condition of the walls of heat exchange tubes and the thickness of deposits thereon, determining the coordinates of a cleaning sector and calculating cleaning time and modes, ejecting a high-pressure jet of water using at least one nozzle configured to rotate around the swiveling axis, and moving the hydrodynamic manipulator according to the coordinates of the cleaning sector with the water jet set at a feed pressure of 1000 to 1500 bar and a flow rate of 100 to 150 l/min and a simultaneous video monitoring of the cleaning zone. The technical result is a shorter cleaning time and more reliable removal of deposits.

## Description

The invention relates to surface cleaning, in particular, it can be used to clean the surface of steam generator tube bundle from lime scale and sludge deposits.

There are known methods for removing local deposits on heat exchange tubes of nuclear power plant (NPP) steam generators, for example, under RF patent No. 2692748, using high-pressure water jets, according to which a manipulator connected to a hoist is inserted into a vertical corridor inside the heat exchanger bounded by tube bundles on the sides, which respectively contain tubes of the heat exchanger passing horizontally; cleaning is carried out using a manipulator and at least one nozzle configured to rotate around the swiveling axis, the orientation of which is consistent with the distance between the tubes in the heat exchanger tube bundle; a water jet is ejected, which is rotated with respect to the area being cleaned, wherein, for the cleaning of heat exchanger, the manipulator can be temporarily fixed with blocking inside the vertical corridor in the positions specified.

The known method does not help determine the maximum cleaning time and local cleaning locations, to achieve positioning accuracy of the manipulator.

The problem solved by the invention is an improved cleaning efficiency.

The technical result of the invention is a shorter cleaning time and reliable removal of deposits.

This technical result is achieved by the fact that in the method for removing local deposits on the heat exchange tubes of NPP steam generators characterized in that the manipulator connected to the hoist is inserted into a vertical corridor inside the heat exchanger and by means of a hydrodynamic manipulator and at least one nozzle configured to rotate around the swiveling axis, the orientation of which is consistent with the distance between the tubes in the heat exchanger tube bundle, and a water jet is ejected rotating with respect to the area to be cleaned, wherein the manipulator is temporarily fixed in predetermined positions within the vertical corridor, it is proposed to pre-measure the dose rate inside the steam generator immediately on site, determine the allowable time for work based on measurement results, measure eddy current signals and analyze the signals obtained to assess the state of the metal of heat exchange tube walls, and then the thickness of deposits on them to search for a sector with local deposits, determine coordinates of the cleaning sector and calculate the time and modes of cleaning, and clean the deposits by impact of a high-pressure jet using a sequentially movable hydrodynamic manipulator installed on a mounting frame configured to rotate and move, placed in accordance with certain coordinates of the cleaning sector, with a set water jet supply pressure from 1000 to 1500 bar and a flow rate from 100 to 150 l/min and a simultaneous video monitoring of the cleaning zone, after the completion of the cleaning process, perform check measurements of eddy current signals and, based on the values obtained, judge the need for further cleaning.

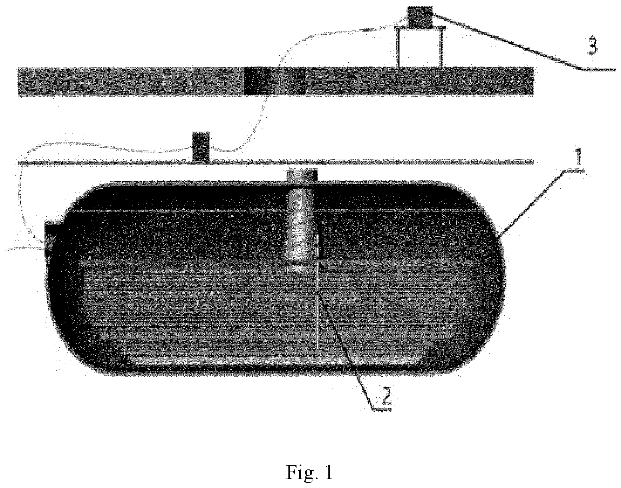

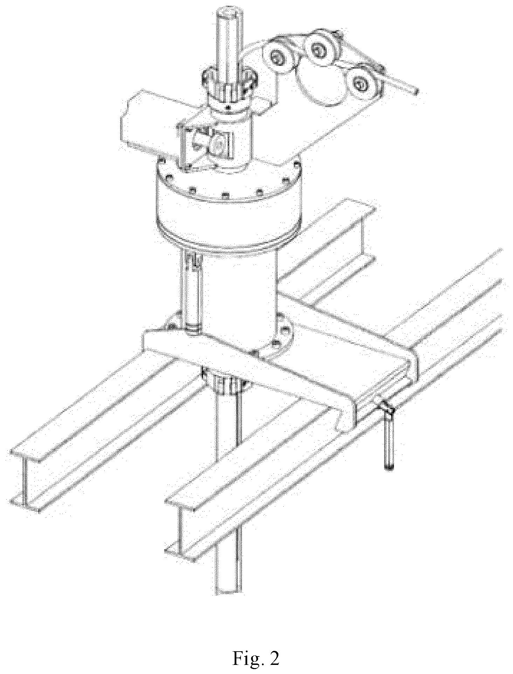

The invention is illustrated by drawings, where Fig. 1 shows a layout of the place of cleaning operations, Fig. 2 shows a general view of a manipulator for hydromechanical cleaning, Fig. 3 shows EC signals with changes in deposit thickness after the first cleaning mode.

The method for removing local deposits on heat exchange tubes of NPP steam generators is carried out as follows.

Dose rate is pre-measured inside the steam generator 1 immediately on site, and based on the measurement results, the allowable time for work at the operator's location 2 is determined.

Then, eddy current signals are measured, and according to the obtained measurements, in order to search for a sector with local deposits, an analysis is carried out to assess the state of the metal of heat exchange tube walls and the thickness of deposits on them. These actions help determine coordinates of the cleaning sector and calculate the time and modes of cleaning.

After that, the hydromechanical manipulator 2 connected to the hoist is inserted into the vertical corridor inside the steam generator 1, using a hydrodynamic manipulator and at least one nozzle installed to rotate around the swiveling axis, the orientation of which is consistent with the distance between the tubes in the heat exchanger tube bundle, the cleaning is carried out. The cleaning process itself includes the following: a water jet is ejected, rotated with respect to the area being cleaned, wherein the hydromechanical manipulator is temporarily fixed in predetermined positions within the vertical corridor, wherein deposits are cleaned by the impact of a high-pressure jet using a sequentially moving hydrodynamic manipulator 2 installed on a mounting frame configured to rotate and move, placed in accordance with the pre-defined coordinates of the cleaning sector. The water jet is supplied with the following set parameters: the pressure of 1000 to 1500 bar and the flow rate of 100 to 150 l/min. During cleaning, simultaneous video monitoring of the cleaning zone is carried out.

After the cleaning is completed, check measurements of the eddy current signals are made and, according to the values obtained, the need for further cleaning is judged.

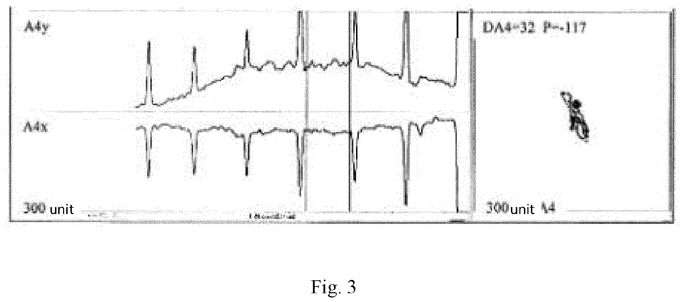

This method was used at Balakovo NPP. During the tests, various combinations of pressure and nozzles with different nozzle diameters were tested. The mode with a pressure of 800 bar, a flow rate of 60-70 l/min and a cleaning time of 20 minutes showed that the contamination remained practically unchanged on most of the surface. Fig. 3 shows EC signals with changes in deposit thickness after the first cleaning mode. Sequential cleaning of the most contaminated tube portions was carried out using a hydrodynamic manipulator, which has a main rotational movement and an auxiliary vertical movement. When the pressure of 1000 to 1500 bar and the water flow of up to 100 or more was reached, the cleaning process was effective, the contamination was removed. Eddy current signal measurements were taken to confirm deposit removal.

## Claims

1. A method for removing local deposits on heat exchange tubes of NPP steam generators **characterized in that** a manipulator connected to a hoist is inserted into a vertical corridor inside the heat exchanger, by means a hydrodynamic manipulator and at least one nozzle configured to rotate around the swiveling axis, the orientation of which is consistent with the distance between the tubes in the heat exchanger tube bundle, a water jet is ejected rotating with respect to the area being cleaned, wherein the manipulator is temporarily fixed in predetermined positions within the vertical corridor, **characterized in that** the dose rate inside the steam generator is preliminarily measured immediately on site, the allowable time of work is determined based on the measurement results, eddy current signals are measured and the received signals are analyzed to assess the state of the metal of heat exchange tube walls and the thickness of deposits on them to search for a sector from the local deposits, coordinates of the cleaning sector are determined and the time and modes of cleaning are calculated, and the cleaning of the deposits is carried out by the impact of a high-pressure jet using a sequentially movable hydrodynamic manipulator installed on a mounting frame configured to rotate and move, placed in accordance with certain coordinates of the cleaning sector, with a set water jet supply pressure from 1000 to 1500 bar and a flow rate from 100 to 150 l/min and a simultaneous video monitoring of the cleaning zone, after the cleaning process is completed, check measurements of eddy current signals are made and the need for further cleaning is judged based on the values obtained.
